# EUROPEAN PATENT SPECIFICATION

(11) **EP 2 710 473 B1**
(45) Date of publication and mention of the grant of the patent: **25.11.2015**
(21) Application number: 11865594.3
(22) Date of filing: 17.05.2011
(51) Int. Cl.: G06F 11/20, G06F 11/14, G06F 11/07

(54) **DISTRIBUTED AVIONICS SYSTEM AND METHOD FOR BACKUP HANDLING IN AN AVIONICS SYSTEM**
VERTEILTES AVIONIKSYSTEM UND VERFAHREN ZUR HANDHABUNG DER DATENSICHERUNG IN EINEM AVIONIKSSYSTEM
SYSTÈME AVIONIQUE RÉPARTI ET PROCÉDÉ DE SAUVEGARDE DE MANIPULATION DANS UN SYSTÈME AVIONIQUE

(43) Date of publication of application: 26.03.2014
(73) Proprietor: SAAB AB, 581 88 Linköping (SE)
(72) Inventor: DANIELSSON, Torkel, S-587 29 Linköping (SE); HÅKEGÅRD, Jan, S-583 33 Linköping (SE); GRIPSBORN, Anders, S-590 74 Ljungsbro (SE)
(74) Representative: Zacco Sweden AB
(86) International application number: PCT/SE2011/050624
(87) International publication number: WO 2012/158081

(56) References cited:
- US-A1- 2010 100 887
- US-A1- 2010 318 834
- US-A1- 2010 318 834
- US-B1- 6 651 242
- US-B1- 7 941 248

## Description

### TECHNICAL FIELD

The present invention relates to a distributed avionics system having reconfiguration means arranged to reconfigure the distributed avionics system upon detection of failure in at least one computer node in the avionics system.

The present invention further relates to a method for back-up handling in a distributed avionics system having a plurality of computer nodes.

### BACKGROUND ART

In the field of avionics, it has always been of high priority and great interest to focus on the reliability of electrical systems. It is, of course, of great importance that each system is reliable in an aerial vehicle in order to have the flight function properly. Generally, the reliability has been solved by providing backup systems to main systems, whereas the backup system takes over the control when a main system is set out of function. In some of the electrical systems of an aerial vehicle, such as flight control systems and the like, it is important that no delay is introduced during the handover, in such systems the backup system is generally running in parallel with the main system. This means that the backup system is substantially a replica of the main system, in hardware as well as in software, and that the backup system must update the parameters of the system in the same manner as the main system, rendering high costs due to the duplication of hardware and the like. The reliability is, hence, a parameter that is under continuous development in order to solve the problem and keep the costs to a minimum. One should understand that the cost of duplication of hardware and the like is very high and is something that should be avoided, if possible.

In today's system, the reliability is solved either by providing very highly reliable components or with redundant hardware, as stated above, and the duplication of functionality with different programs. The redundant systems not only generate high costs, but also introduce a factor that affects the failure rate negatively, as one actually introduces new components that also can fail. Also, it is very costly to create specially adapted applications software solutions in which each application software program is adapted with routines and procedures that monitor other application software. It is therefore a desire of the avionic industry to provide high availability of functions of the system at lower costs and with reduced volume. Thereby, it can be avoided to fill up the interior of the plane with backup equipment. It is further a desire to provide availability of functions without significant increase of weight in order to keep the fuel consumption as low as possible and in order to prevent sacrificing of general flight characteristics.

It is known to switch between a hardware unit to another hardware unit in an electrical system when a hardware unit fails in order to receive a high reliability of the system. Document GB-patent 2,420,574 relates to a redundant system wherein two similar application stations switch information; the status of the first application is transferred to the second application at regular intervals, in order to handover the control to the second application when the first application fails. The constantly backup running application station comprises hardware and software that increase the costs, weight, and volume, in order to be introduced into an electrical system of a vehicle.

Further, in avionics systems, it is necessary to share information between different avionics subsystems in order to reduce the number of functional modules such as Line Replaceable Units (LRU:s). A single sensor such as a position sensor provided information to weapon systems, display system, autopilot and navigation system.

The high level architecture of avionics systems has gone from federated meaning separate LRU:s for separate functions to integrated modular avionics (IMA) meaning several functions integrated into multifunctional LRU:s. The connectivity allowing communication between different LRU:s has gone from low bandwidth point-to-point connections to higher bandwidth switched bus connections.

Guidance set out by Radio Technical Commission for Aeronautics (RTCA) in DO-178B and RTCA DO-254 regulates how to design and develop software and respective hardware in a safe way in order to show airworthiness, according to a criticality scale. However certification and subsequent recertification of software according to the DO-178B represents a substantial cost of developing software based avionic control systems.

In order to assist development of modern control systems for avionics a set of guidance documents such as DO-297 and Aeronautical Radio Inc. (ARINC) 651 defines general concepts for IMA systems. Further ARINC 653 "Avionics application software standard interface", defines an Application Program Interface API referred to as Application Executive (APEX), implemented in Real-Time Operating Systems (RTOS) used for avionic control systems. APEX allows for space and time partitioning that may be used wherever multiple applications need to share a single processor and memory resource, in order to guarantee that one application cannot bring down another in the event of application failure.

Document US 6,886,024 B1 discloses a system in which execution of plural applications distributed over plural computers is controlled using a simplified script language to realize coordination among plural applications to enable facilitated construction of upper-order distributed applications. Each computer includes, on an agent platform, an agent base capable of having a shell agent, a local service agent and an application agent, an agent movement unit, thread generating unit, remote control unit and agent generating unit. A script language input through an input unit is interpreted by the shell agent to boot the application agent. The application agent supervises an actual application. The shell agent and the application agent can be moved to another computer using the agent movement unit and can have communication with an agent in the other computer with the aid of the remote control unit.

In US 7 062 674, hardware failures are handled by use of logical computers. The system comprises a plurality of computers using computers comprising plural physical processors. The logical computers can then be assigned to different physical processors. During failure recovery, reduction in service is prevented by increasing processor amounts of other active logical computers of the system.

US 2010/318834 relates to reconfiguring of an avionics system in the event of a failure of a computer. A plurality of computer nodes are arranged to execute a plurality of partitions/applications. Reconfiguration means are arranged to reconfigure the distributed avionics system upon detection of failure in at least one of the computer nodes. Each partition/application is associated to an application/partition availability level. The reconfiguration means are arranged to reconfigure the distributed avionics system based on the partition/application availability levels of the partition/applications.

### SUMMARY OF THE INVENTION

In view of the foregoing, it is an object to provide availability in an avionics system without affecting the costs, weight and volume as much as conventional systems.

This has in accordance with one embodiment of the invention been achieved by means of a distributed avionics system having a plurality of computer nodes arranged to execute a plurality of partitions/applications, wherein the distributed avionics system comprises reconfiguration means arranged to reconfigure the distributed avionics system upon detection of failure in at least one of the computer nodes. Each partition/application is associated to an application/partition availability level. The reconfiguration means are arranged to reconfigure the distributed avionics system based on the partition/application availability levels of the partition/applications.

In accordance with this embodiment, the partition/applications are divided into a plurality of subsets based on the partition/application availability levels and each subset is executed on a predetermined computer node in normal operation. The reconfiguration means are then arranged to reconfigure the distributed avionics system so that the subset of partitions/applications normally executed to the faulty computer node are reconfigured to be executed in at least one of the other nodes based on the partition/application availability levels. For example, the reconfiguration means can be arranged to reconfigure the distributed avionics system so as to prevent partitions/applications from execution associated to a lowest partition/application availability level

Each computer node is assigned to at least one unique role and each role comprises a subset of the partitions/applications. Each role is associated to a role availability level defining a maximum allowable partition/application availability level to be executed in that role. The availability levels indicate a criticality of the role. The reconfiguration means are arranged to assign the subset of partitions/applications of the role associated to the computer node in which failure has been detected to one computer node presently associated to the role having the lowest availability level.

One effect of this is that when the distributed avionics system does not provide full functionally, it is clearly defined which part of the avionics system is not operating. In accordance with this option one or a plurality of roles are removed from execution at computer node failure in one or a plurality of nodes. If each role is associated to certain functionality, it can be intuitively understood which functions are presently not available.

One advantage of the invention is that operation of the most important partitions/applications can be secured without adding redundant computer hardware.

In one option, the reconfiguration means are arranged to prevent execution of the subset of partitions/applications associated to the role having the lowest availability level. In accordance with this option one or a plurality of partition/application availability levels are removed from execution at computer node failure. If each partition/application level is associated to certain functionality, it can be intuitively understood which functions are presently not available.

In accordance with one option, the reconfiguration means are arranged to prevent execution of partitions/applications associated to the same availability level as the availability level of the role prevented from execution also in other roles

In accordance with one option, the reconfiguration means are arranged to reconfigure the distributed avionics system so as to prevent partitions/applications from execution associated to a lowest partition/application availability level.

In accordance with one option, the reconfiguration means are arranged to prevent the execution of partitions/applications as long as the computer node failure remains.

In accordance with one option, the reconfiguration means are operatively connected to presentation means arranged to present information related to the failure in at least one computer node. For example, the presentation means can be arranged to present information related to the role of partition/application availability level(s) which is/(are) presently not executed. Thereby, the operator of a vehicle, such as an aircraft pilot, provided with the distributed avionics system is fed with information related to which functionality is presently not available.

The distributed avionics system comprises in accordance with one option fault detection means arranged to perform the detection of failure in at least one of the computer nodes. The fault detection means may further be arranged to detect whether the faulty computer node is functioning again. The reconfiguration means can then be arranged to reconfigure the faulty node upon detection that it is functioning again so as to execute those partitions/applications excluded from execution during the computer node failure. By acting in this manner, the lower level roles and/or partitions/applications previously prevented from execution can be restarted without disturbing the execution of the higher level roles and/or partitions/applications in the other computer nodes.

In accordance with one option, each node has access to at least all partitions/application having the same or higher partition/application availability level than the role availability level of the role to which it is associated. Each node can have access to all partitions/applications.

In one option, the role availability levels and/or partition/application availability levels are represented by discrete Aircraft Capability Levels classified based on the contents or functionality of the applications/partitions.

The present invention also relates to a method reconfiguration in a distributed avionics system having a plurality of computer nodes. The method comprises the following steps:
providing a set of partitions/applications to be executed by the distributed avionics system,
assigning a partition/application availability level to each partition/application,
assigning each computer node to at least one unique role, wherein each role comprises a subset of the partitions/applications and assigning each role to a role availability level defining a maximum allowable partition/application availability level to be executed in that role, wherein the availability levels indicate a criticality of the role,
assigning a separate subset of the partitions/applications for execution by each node based on the partition/application availability levels,
monitoring operation of the computer nodes so as to detect at least one fault condition in one of the computer nodes, and
re-assigning the subset of partitions/applications of the role associated to the computer node in which the fault condition has been detected to that computer node presently associated to the role having the lowest availability level.

### BRIEF DESCRIPTION OF THE DRAWINGS

Fig 1 is a block diagram showing one example of a distributed avionics system.
Fig 2 is a schematic presentation of how roles are built up.
Fig 3 is a block diagram showing an example of a part of the distributed avionics system in Fig 1.
Fig 4 is a flow chart illustrating an example of a method for backup handling in a distributed avionics system.
Fig 5 is a schematic presentation of an example of configuration of a computer node in the avionics system of Fig 1.
Fig 6 is a block diagram showing an example of an extended distributed avionics system.

### DETAILED DESCRIPTION

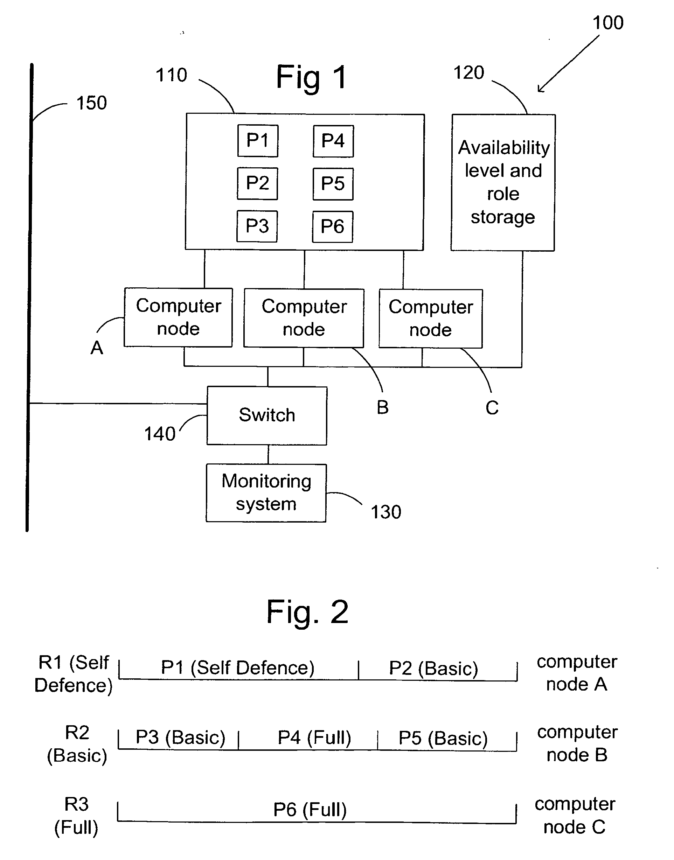

In Fig 1, a distributed avionics system 100 is capable of backup-handling. The avionics system is for example intended for use in an aerial vehicle such as an aircraft (e.g. a fighter aircraft) or in an UAV (unmanned aerial vehicle). The distributed avionics system has a plurality of computer nodes A, B, C. In the shown example, the computer nodes all have access to a memory 110 loaded with applications or partitions P1, P2, P3, P4, P5, P6 intended to be executed by the distributed avionics system. The applications and/or partitions relate in one example to performance relating to abilities such as radar, navigation, etc. In practice, each computer node may have a memory area, wherein the partitions/applications P1, P2, P3, P4, P5, P6 are stored.

The distributed avionics system further comprises an availability level and role storage 120 formed in a single or in a plurality of physical entities. The storage 120 contains information assigning each computer node to a role (R1, R2, R3). In one example each computer node is assigned to a unique role associated to a unique availability level. In the shown example, computer node A is assigned to a first role having a first availability level, computer node B is assigned to a second role having a second availability level and computer node C is assigned to a third role having a third availability level. In one example the availability levels are aircraft capability levels (ACL). In one example, the aircraft availability levels are given as a numbers or other indicators so as to indicate the importance of availability for each level. The aircraft availability levels are for example "Self defence", "Basic" and "Full", wherein "Self defence" is the most critical role and "Full" is the least critical role. Each role comprises at least one partition/application.

The availability level and role storage 120 also is arranged to store a partition/application availability level associated to each partition/application. In one example the same levels are used for the partitions/applications as for the roles (R1, R2, R3). Accordingly, in one example the availability levels are aircraft capability levels (ACL) such as "Self defence", "Basic" and "Full". In accordance with this example, wherein the same levels are used for the roles as for the partitions/applications, the role availability level defines the maximum allowable partition/application availability level to be executed in that role.

In the illustrated example, all nodes have access to all partitions/applications by means of the memory 110 common for all computer nodes. In another example, an individual memory is associated to each computer node, each individual memory containing all applications or partitions. In yet another example, each computer node has access to at least all partitions/application having the same or higher availability level than the role to which it is associated in a normal operation mode. The access is for example provided by means of an individual memory associated to the node.

The computer nodes A, B, C are arranged to communicate avionics data between themselves and with an avionics data bus or network 150 by means of avionics data messages. The avionics data messages comprise destination data indicating the intended destination for the message. The destination data indicates the role of the destination. The data transmitted between the computer nodes and to and from the avionics system 100 via the avionics data bus passes a switch 140. The switch 140 is arranged to translate received destination data given as role information into destination data in the form of computer node information and translate the role information into computer node information. Thereby, it is secured that data is always transferred to that computer node which is associated to the destination role indicated in the avionics data message. In one example, the role information is given as a role ID. In one example, the computer node information is given as a computer node ID. In one example, the switch 140 is realized as a multicast IP switch for example operating in accordance with RFC 1112.

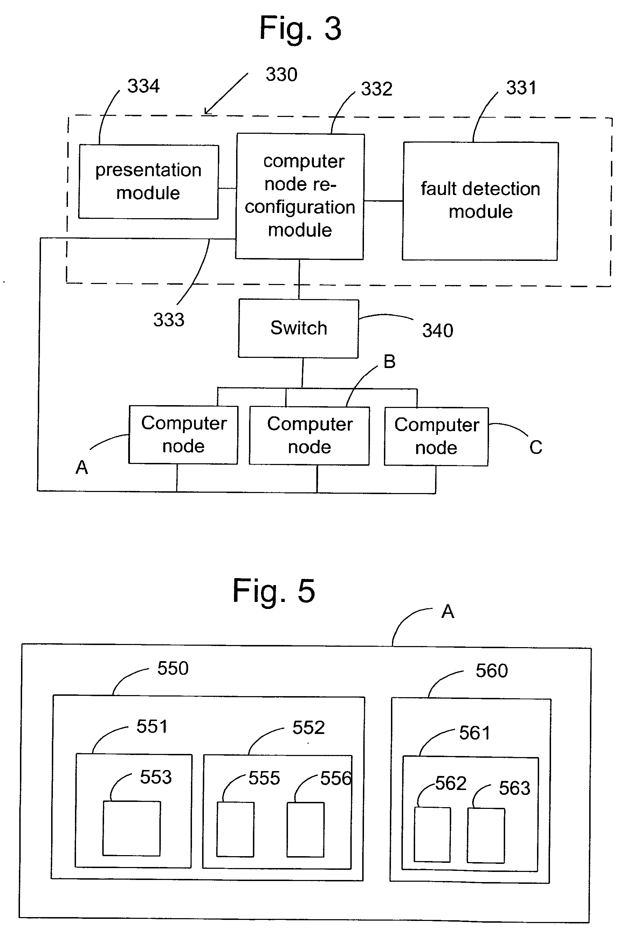

Further, the distributed avionics system 100 comprises a monitoring system 130 arranged to reconfigure the distributed avionics system upon detection of failure in at least one of the computer nodes A, B, C based on the role availability levels. The monitoring system 130 is then arranged to control the switch 140 so that no role is associated to the faulty computer node. Instead, the monitoring system is arranged to control the operation of the switch such that data associated to that role which in normal operation is associated to the faulty computer node now, in a reconfigured mode, is directed to another computer node. The operation of the monitoring system will be described more in detail in relation to Fig 3.

In Fig 2, an example of a configuration of the roles (R1, R2, R3) is described more in detail. As described above, each role is loaded into and executed by a dedicated computer node to which it is assigned. In the illustrated example role R1 having the availability level "Self Defence" is loaded into and executed by computer node A. Further, role R2 having the availability level "Basic" is loaded into and executed by computer node B. Roll R3 having the availability level "Full" is loaded into and executed by computer node C. Each role is built up by a set of applications or partitions. As described above, each partition/application is associated to a availability level in accordance with the same scheme as for the availability levels of the roles. The applications/partitions associated to a role have the same or lower availability level specified by the role. In the illustrated example, role R1 is built up by a first application/partition P1 associated to the "Self Defence" level and a second application/partition P2 associated to the "Basic" level. Role R2 is built up by a third application/partition P3 associated to the "Basic" level, a fourth application/partition P4 associated to the "Full" level and fifth application/partition P5 associated to the "Basic level" level. Role R3 is built up by an application/partition associated to the "Full level".

In one example, the computer nodes A, B, C are configured to execute a partitioning operative system (OS), such as for example an OS compliant with the commercial Aeronautical Radio Inc. (ARINC) 653 specifications. This enables different applications to execute on separate partitions of a single processor, where the execution of each application is partitioned regarding execution time and memory space. The partitioning allows for running applications certified to different availability levels measured by design assurance level DAL according to the RTCA DO-178B on a single processor.

In one example each partition relates to one application. In accordance with this example, the references P1, P2, P3, P4, P5, P6 herein used relates to a partition and to an application. Alternatively, at least some of the partitions relate to a plurality of applications. In this case, the references P1, P2, P3, P4, P5, P6 herein used relates either to partitions or to applications. Each of the applications may comprise one or more tasks.

In Fig 3, a monitoring system 330 is arranged to monitor operation in the computer nodes A, B, C and to reconfigure the distributed avionics system so that execution of higher availability level roles and/or partitions/applications is prioritized (in a reconfigured mode of operation) upon detection of a fault condition in any of the computer nodes. The monitoring system comprises a fault detection module 331 arranged to detect at least one fault condition associated to the nodes. In one example, the fault detection module is arranged to perform various system status test procedures in order to detect at least one fault condition associated to the avionics system. In one example, fault detection software routines are processed by the computer nodes and the detected faults are registered by the fault detection module 331. The fault detection module 331 and/or fault detection software routines may be arranged to perform various monitoring operations relating to data received in the computer nodes, data provided by processing the partitions/applications in the computer nodes, and/or execution data such as for example execution timing associated to processing the partitions/applications. Examples of such monitoring are cyclic redundancy checks (CRC), data range tests, watchdog timing and or other known monitoring process known in the art. As an example the at least one fault condition may comprise one or more fault conditions such as for example deadlocks, race conditions, invalid data.

In one example the fault detection module 331 and/or fault detection software routines are arranged to transmit information to a computer node reconfiguration module 332 in response to detection of at least one fault condition. The information transmitted to the computer node reconfiguration module 332 may comprise information indicating that there exists a fault condition in a computer node and an identity of said computer node.

In response to receiving information indicating that there exists a fault condition in one of the computer nodes, computer node reconfiguration module 332 is arranged to progress accordingly.

Generally, the computer node reconfiguration module 332 is arranged to assign the role associated to the computer node in which a fault condition has been detected to that computer node presently associated to the role having the lowest role availability level. The computer node reconfiguration module 332 may further be arranged to prevent execution of that role having the lowest availability level at least as long as the computer node fault remains.

In detail, the computer node reconfiguration unit is arranged to perform the following operations upon detection of a fault condition, performed in parallel or serially. If the operations are performed serially, they can be performed in the herein described order or in another order.

Firstly, the computer node reconfiguration unit 332 is arranged to assign the role associated to the computer node in which a fault condition has been detected to that computer node presently associated to the role having the lowest role availability level. Then, the computer node reconfiguration module 332 is arranged to control a switch 340 as described in relation to Fig 1 to translate data associated to the role previously associated to the computer node having a fault condition to the computer node previously having the lowest availability level. The computer node reconfiguration module 332 is in one example further arranged to control the switch 340 not to transfer data originating from and/or destined to the role having the lowest availability level.

Further, the computer node reconfiguration module 332 is arranged to feed a reconfiguration request signal to that computer node taking over the role of the faulty computer node. The computer node taking over the role of the faulty computer node is as described above connected to the memory 110 and therefore has access to the applications/partitions associated to the role of the faulty node. Accordingly, the overtaking computer node is rebooted with the role of the faulty node upon reception of the reconfiguration request. In the example of Fig 3, the computer node reconfiguration module is operatively connected to all computer nodes via a reconfiguration line 333. In accordance with this illustrated example, the reconfiguration request is transmitted to the dedicated computer node(s) over the reconfiguration line 333. In a not illustrated example, the reconfiguration line 333 is operatively connected to the computer nodes via the switch 340.

The computer node reconfiguration module 332 is in the illustrated example connected to a presentation module 334 arranged to present information that one or more computer nodes are not operating. The presentation module 334 is in one example display arranged to visually present the information. The presentation module is in another example arranged to present the information by audio, for exempel orally. In yet another example, the presentation module 334 is arranged to present the information both visually and by audio.

In one example, the computer node reconfiguration module 332 is arranged to prevent execution of all partitions/applications associated to the availability level associated to the availability level of the role prevented from execution. In accordance therewith, the computer node reconfiguration module 332 is in one example arranged to feed a minimum allowed availability level signal to the computer nodes. In one example, the minimum allowed availability level signal is feed to the computer nodes over the reconfiguration line 333. Upon reception of such information, the nodes are then arranged to secure that the node only executes partitions/application having the minimum allowed availability level or a higher availability level. In accordance with this example, when the role R3 ("full ") of the example of Fig 2 is stopped from execution, also the partition/application P4 of role R2 ("basic") is stopped from execution, as that partition/application P4 is associated to the "full" level.

The presentation module 334 is in accordance with this example arranged to present information that one or more availability levels are not operating. As it should be known to a pilot which functions are related to a given availability level, this presentation clearly indicates which functionality is lost.

In one example, the computer node reconfiguration module 332 is arranged to detect whether the faulty computer node is functioning again. In accordance with this example the computer node reconfiguration module 332 is arranged to control execution of the partitions/applications excluded from execution in that node. In detail, the fault detection module 331 may be arranged to detect that a previously detected fault condition in one computer node has ceased to exist. In case the fault detection module 331 detects that the previously detected at least one fault condition has ceased to exist the fault detection module 331 may be arranged to transmit information to the computer node reconfiguration module 332 relating to that the previously detected at least one fault condition has ceased to exist. In response to receiving information relating to that the previously detected at least one fault condition has ceased to exist, the computer node reconfiguration module 332 is arranged to control execution of the role and/or partitions/applications excluded from execution due to the detected fault. Accordingly, firstly, the computer node reconfiguration module 332 is arranged to assign the low availability level role to that computer node previously suffering from the fault condition. Then, the computer node reconfiguration module 332 is arranged to control the switch 340 to translate data associated to the low availability level role to that computer node previously suffering from the fault condition. Further, the computer node reconfiguration module 332 is arranged to feed a reconfiguration request signal to that computer node previously suffering from the fault condition. The computer node previously suffering from the fault condition has access to the applications/partitions associated to the low criticality role. Accordingly, the computer node previously suffering from the fault condition is rebooted with the low level criticality role. Alos other low availablilty level partitions/applications associated to other roles and previously excluded from execution may be restarted. The presentation module 334 may be arranged to present information that the low availability level role and optionally also other low availability level partitions/applications are now running again.

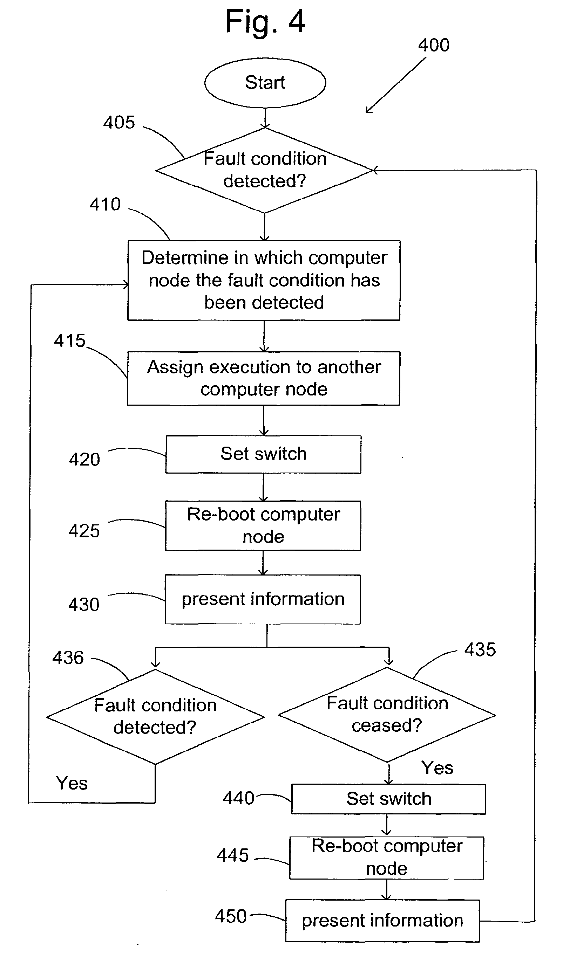

Now, a method 400 for performing back-up handling in a distributed avionics system is described in relation to Fig 4. The back-up handling is performed so as to provide higher availability for more important functions and lower availability for less important functions. In a first step 405, operation of the computer nodes A, B, C is monitored so as to enable detection of at least one fault condition associated to the nodes. Upon detection, of a fault condition, the method proceeds to a following step 410 of determining in which computer node the fault condition has occurred.

Thereafter, in a following step 415, the role associated to the computer node in which a fault condition has been detected is assigned to that computer node presently associated to the role having the lowest role availability level. Then, a switch is controlled 420 to translate data associated to the role previously associated to the computer node having a fault condition to the computer node previously having the lowest availability level. Further, the computer node taking over the role of the faulty computer node is rebooted 425 with the role of the faulty node. Then, information is presented 430 for example informing about that one or more computer nodes are not operating or that one or a plurality of availability levels are not functioning. It is then detected 436 whether the fault condition remains (a plurality of errors (for example double errors ) exists), The process then returns to step 410 in order to handle each remaining error. New errors can also be detected 436, in which case the process also returns to step 410.

In the illustrated example, it can also be detected 435 whether the faulty computer node is functioning again. Accordingly, firstly, the low availability level role previously stopped from execution is assigned to that computer node previously suffering from the fault condition. To this end, the switch is controlled 440 to translate data associated to the low availability level role previously stopped from execution to that computer node previously suffering from the fault condition. Further, the computer node previously suffering from the fault condition is rebooted 445 with the low level criticality role. Also other other low availability level partitions/applications associated to other roles an prevented fron execution may be restarted. Information that the low availability level role and optionally also other low availability level partitions/applications are now running again is then presented 450. The avionics system is then operating with the previously faulty computer node operating in the low level role and the system is not going back to the normal operational mode until the system is shut down or the like (not operating any more). In this way, the computer nodes executing the high level roles need not be re-booted during operation of the avionics system. If a new fault is detected, the method jumps back to step 410.

With reference to Fig 5, a computer node may comprise one or more partitioned applications such as for example a first application 551, a second application 552 and a third application 561. Each of the applications may be divided into one or more partitions such as for example a first partition 550 associated to the first application 551 and the second application 552 and a second partition 560 associated to the third application 561. Each of the applications 551-552 and 561 may further comprise one or more tasks. As an example a first task 553 may be associated to the first application 551, a second task 555 and a third task 556 may be associated to the second application 552 and a fourth task 562 and fifth task 563 may be associated to the third application 561.The computer nodes may further each comprise an abstraction layer provided by an application programming interface (API) located between application software in the computer node and operative system OS. The API may be arranged to provide a set of basic services to the set of applications required for performing their respective tasks and in order to communicate.

Each process may be assigned a process execution frequency, whereupon the process is periodically executed. Each task or set of task may be associated to communication ports referred to as sampling port or queuing ports for communication of data messages comprising units of data.

In one example the API may be arranged as an application executive (APEX), conforming to the ARINC 653 specifications. The implementation of the ARINC 653 specifications, in regard of high level IMA architecture prevents error propagation when running different applications on a single processor.

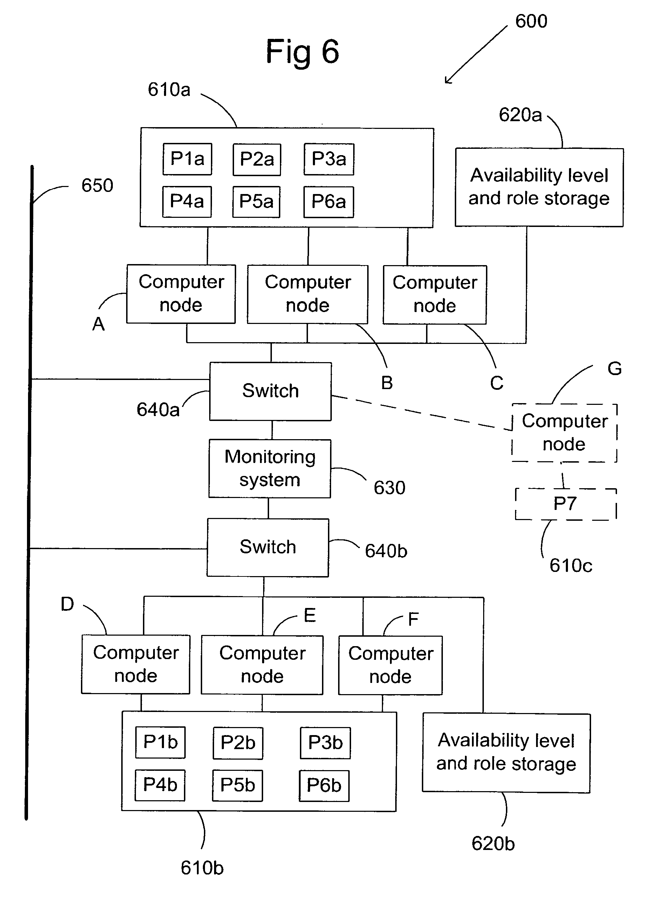

In Fig 6, an extended distributed avionics system 600 comprises a plurality of sets of computer nodes. In the illustrated example, two sets of computer nodes A, B, C and D, E, F shown. Each set of computer nodes has access to a corresponding set of partitions or applications P1 a, P2a, P3a, P4a, P5a, P6a respectively P1 b, P2b, P3b, P4b, P5b, P6b. In the shown example, the respective partition/application is stored on a corresponding memory 110a, 110b. In practice, each computer node may have a memory area, wherein the partitions/applications associated to the set of computer nodes to which the computer node is belonging, are stored.

The distributed avionics system 600 further comprises an availability level and role storage 620a, 620b associated to each node. Each storage 620a, 620b contains information assigning each computer node of the respective set of computer nodes to a role. In one example each computer node of each set is assigned to a unique role associated to a unique availability level. For example, each set of computer nodes is assigned to a set of roles comprising a first role having a first availability level, a second role having a second availability level and a third availability level. The first roles associated to the different sets of computer nodes comprises in one example different partitions/applications. The same applies for the second and third roles. In one example, at least one of the sets of computer nodes are not arranged to execute all roles but only a subset of the roles. In practice, each computer node may have a memory area, wherein the roles associated to the set of computer nodes to which the computer node is belonging, are stored

Each availability level and role storage 620a, 620b also is arranged to store a partition/application availability level associated to each partition/application P1 a, P2a, P3a, P4a, P5a, P6a respectively P1 b, P2b, P3b, P4b, P5b, P6b . In one example the same levels are used for the partitions/applications as for the roles. As described in relation to Fig 1, the role availability level then defines the maximum allowable partition/application availability level to be executed in that role.

As described above, all nodes may have access to all partitions/applications by means of the memory 610a, 610b common for all computer nodes of each set of computer nodes. Alternatively, an individual memory may be associated to each computer node. Each individual memory may then contain all applications or partitions. Alternatively, each computer node has access to at least all partitions/application having the same or higher availability level than the role to which it is associated in a normal operation mode. The access is for example provided by means of an individual memory associated to the node.

The computer node sets A, B, C respectively D, E, F are arranged to communicate avionics data between themselves and with an avionics data bus 650, as described in relation to Fig 1 using a corresponding switch 640a, 640b arranged to translate received destination data given as role information into destination data in the form of computer node information and translate the role information into computer node information.

Further, the distributed avionics system 600 comprises a monitoring system 630 arranged to reconfigure the distributed avionics system upon detection of failure in at least one of the computer nodes A, B, C. D, E, F based on the role availability levels. The monitoring system 630 is then arranged to control the switches 640a, 640b so that no role is associated to the faulty computer node. Instead, the monitoring system is arranged to control the operation of the switches such that data associated to that role which in normal operation is associated to the faulty computer node now, in a reconfigured mode, is directed to another computer node within the set of computer nodes to which the faulty node is belonging.

In one example, the avionics system is also arranged to use computer nodes operating without backup function. In the example illustrated in Fig 6, the avionics system comprises at least one additional computer node G arranged to execute at least one partition/application P7. The at least one additional computer node G is in one example addressed with its physical identity and not with a role. The switch then need not translate destination addresses associated to that at least one computer node. The monitoring system 630 may be arranged to monitor the operation of that node though and alarm accordingly upon detection of a fault in that node.

## Claims

1. A distributed avionics system (100, 500) having a plurality of computer nodes arranged to execute a plurality of partitions/applications (P1, P2, P3, P4, P5, P6), said distributed avionics system comprising reconfiguration means (332) arranged to reconfigure the distributed avionics system upon detection of failure in at least one of the computer nodes, wherein
- each partition/application is associated to a application/partition availability level, and in that the reconfiguration means are arranged to reconfigure the distributed avionics system based on the partition/application availability levels of the partition/applications (P1, P2, P3, P4, P5, P6); and **characterized in that**
- each computer node is assigned to at least one unique role and **in that** each role comprises a subset of the partitions/applications (P1, P2, P3, P4, P5, P6); and
- each role is associated to a role availability level defining a maximum allowable partition/application availability level to be executed **in that** role, wherein the availability levels indicate a criticality of the role, and
wherein the reconfiguration means are arranged to assign the subset of partitions/applications, of the role associated to the computer node in which failure has been detected, to one computer node presently associated to the role having the lowest availability level.

2. A distributed avionics system according to claim 1, wherein the reconfiguration means are arranged to prevent execution of the subset of partitions/applications associated to the role having the lowest availability level.

3. A distributed avionics system according to claim 2, wherein the reconfiguration means are arranged to prevent execution of partitions/applications associated to the same availability level as the availability level of the role prevented from execution also in other roles.

4. A distributed avionics system according to claim 1, **characterized in that** the reconfiguration means (332) are arranged to reconfigure the distributed avionics system so as to prevent partitions/applications from execution associated to a lowest partition/application availability level.

5. A distributed avionics system according to any of the preceding claims, wherein the reconfiguration means are arranged to prevent the execution of partitions/applications as long as the computer node failure remains.

6. A distributed avionics system according any of the preceding claims, wherein the reconfiguration means (332) are operatively connected to presentation means (334) arranged to present information related to the failure in at least one computer node.

7. A distributed avionics system according to claim 5, wherein the presentation means (334) are arranged to present information related to the availability level(s) which is/(are) presently not executed.

8. A distributed avionics system according to any of the preceding claims, comprising fault detection means (331) arranged to perform the detection of failure in at least one of the computer nodes.

9. A distributed avionics system according to claim 8, wherein the fault detection means (331) further are arranged to detect whether the faulty computer node is functioning again, and in that the reconfiguration means (332) are arranged to reconfigure the faulty node upon detection that it is functioning again so as execute those partitions/applications excluded from execution during the computer node failure.

10. A distributed avionics system according to any of the preceding claims, wherein each node has access to at least all partitions/application having the same or higher partition/application availability level than the role availability level of the role to which it is associated.

11. A distributed avionics system according to claim 10, wherein each node has access to all partitions/applications.

12. A distributed avionics system according to any of the preceding claims, wherein the role availability levels and/or partition/application availability levels are represented by discrete Aircraft Capability Levels classified based on the contents or functionality of the applications/partitions.

13. A method for reconfiguration in a distributed avionics system having a plurality of computer nodes (A, B, C), said method comprising the following steps:
providing a set of partitions/applications (P1, P2, P3, P4, P5, P6) to be executed by the distributed avionics system,
assigning a partition/application availability level to each partition/application (P1, P2, P3, P4, P5, P6),
assigning each computer node (A, B, C) to at least one unique role and wherein each role comprises a subset of the partitions/applications (P1, P2, P3, P4, P5, P6) and assigning each role to a role availability level defining a maximum allowable partition/application availability level to be executed in that role, wherein the availability levels indicate a criticality of the role,
assigning a separate subset of the partitions/applications for execution by each node based on the partition/application availability levels,
monitoring operation of the computer nodes (A, B, C) so as to detect at least one fault condition in one of the computer nodes, and
re-assigning the subset of partitions/applications of the role associated to the computer node in which the fault condition has been detected to that computer node presently associated to the role having the lowest availability level.

## Patentansprüche

1. Verteiltes Avioniksystem (100, 500), das eine Vielzahl von Computerknoten hat, die dazu eingerichtet sind, eine Vielzahl von Partitionen/Applikationen (P1, P2, P3, P4, P5, P6) auszuführen, wobei das verteilte Avioniksystem Neukonfigurationseinrichtungen (332) umfasst, die dazu eingerichtet sind, das verteilte Avioniksystem bei der Erfassung einer Fehlfunktion in wenigstens einem der Computerknoten neu zu konfigurieren, wobei
- jede Partition/Applikation einem Partitions-/Applikations-Verfügbarkeitsgrad zugeordnet ist und die Neukonfigurationseinrichtungen dazu eingerichtet sind, das verteilte Avioniksystem auf der Basis der Partitions-/Applikations-Verfügbarkeitsgrade der Partitionen/Applikationen (P1, P2, P3, P4, P5, P6) neu zu konfigurieren; und **dadurch gekennzeichnet, dass**
- jeder Computerknoten wenigstens einer eindeutigen Aufgabe zugewiesen ist, und dass jede Aufgabe einen Teilsatz der Partitionen/Applikationen (P1, P2, P3, P4, P5, P6) umfasst; und
- jede Aufgabe einem Aufgaben-Verfügbarkeitsgrad zugeordnet ist, der einen maximal zulässigen Partitions-/Applikations-Verfügbarkeitsgrad definiert, der in dieser Aufgabe auszuführen ist, wobei die Verfügbarkeitsgrade, eine Kritikalität der Aufgabe kennzeichnen, und
die Neukonfigurationseinrichtungen dazu eingerichtet sind, den Teilsatz der Partitionen/Applikationen der Aufgabe, die dem Computerknoten zugeordnet ist, in dem eine Fehlfunktion erfasst wurde, einem Computerknoten zuzuordnen, der momentan der Aufgabe zugewiesen ist, die den niedrigsten Verfügbarkeitsgrad hat.

2. Verteiltes Avioniksystem nach Anspruch 1, bei dem die Neukonfigurationseinrichtungen dazu eingerichtet sind, eine Ausführung des Teilsatzes von Partitionen/Applikationen zu verhindern, die der Aufgabe zugewiesen sind, die den geringsten Verfügbarkeitsgrad hat.

3. Verteiltes Avioniksystem nach Anspruch 2, bei dem die Neukonfigurationseinrichtungen dazu eingerichtet sind, die Ausführung von Partitionen/Applikationen zu verhindern, die demselben Verfügbarkeitsgrad zugewiesen sind, wie der Verfügbarkeitsgrad der Aufgabe, deren Ausführung auch in anderen Aufgaben verhindert wird.

4. Verteiltes Avioniksystem nach Anspruch 1, **dadurch gekennzeichnet, dass** die Neukonfigurationseinrichtungen (332) dazu eingerichtet sind, das verteilte Avioniksystem derart neu zu konfigurieren, dass die Ausführung der Partitionen/Applikationen verhindert wird, die einem geringsten Partitions-/Applikations-Verfügbarkeitsgrad zugewiesen sind.

5. Verteiltes Avioniksystem nach einem der vorhergehenden Ansprüche, bei dem die Neukonfigurationseinrichtungen dazu eingerichtet sind, die Ausführung der Partitionen/Applikationen zu verhindern, solange die Fehlfunktion des Computerknotens bestehen bleibt.

6. Verteiltes Avioniksystem nach einem der vorhergehenden Ansprüche, bei dem die Neukonfigurationseinrichtungen (332) wirkungsmäßig mit Darstellungseinrichtungen (334) verbunden sind, die dazu eingerichtet sind, Informationen darzustellen, die sich auf eine Fehlfunktion in wenigstens einem Computerknoten beziehen.

7. Verteiltes Avioniksystem nach Anspruch 5, bei dem die Darstellungseinrichtungen (334) dazu eingerichtet sind, Informationen darzustellen, die sich auf den (die) Verfügbarkeitsgrad(e) beziehen, der (die) derzeit nicht ausgeführt wird (werden).

8. Verteiltes Avioniksystem nach einem der vorhergehenden Ansprüche, umfassend Fehlererfassungseinrichtungen (331), die dazu eingerichtet sind, die Erfassung eines Fehlers in wenigstens einem der Computerknoten zu auszuführen.

9. Verteiltes Avioniksystem nach Anspruch 8, bei dem die Fehlererfassungseinrichtungen (331) weiterhin dazu eingerichtet sind zu erfassen, ob der fehlerhafte Computerknoten erneut funktioniert, und die Neukonfigurationseinrichtungen (332) dazu eingerichtet sind, den fehlerhaften Knoten bei der Erfassung derart neu zu konfigurieren, dass er wieder funktioniert, um so jene Partitionen/Applikationen auszuführen, die von der Ausführung während der Fehlfunktion des Computerknotens ausgeschlossen sind.

10. Verteiltes Avioniksystem nach einem der vorhergehenden Ansprüche, bei dem jeder Knoten Zugang zu wenigstens sämtlichen Partitionen/Applikationen hat, die denselben oder höheren Partitions-/Applikations-Verfügbarkeitsgrad haben als der Aufgaben-Verfügbarkeitsgrad der Aufgabe, der er zugeordnet ist.

11. Verteiltes Avioniksystem nach Anspruch 10, bei dem jeder Knoten einen Zugang zu sämtlichen Partitionen/Applikationen hat.

12. Verteiltes Avioniksystem nach einem der vorhergehenden Ansprüche, bei dem die Aufgaben-Verfügbarkeitsgrade und/oder die Partitions-/Applikations-Verfügbarkeitsgrade durch diskrete Aircraft Capability Levels dargestellt sind, die auf der Basis der Inhalte oder der Funktionalität der Applikationen/Partitionen klassifiziert sind.

13. Verfahren für die Neukonfiguration in einem verteilten Avioniksystem, das eine Vielzahl von Computerknoten (A, B, C) hat, wobei das Verfahren die folgenden Schritte umfasst:
Bereitstellen eines Satzes von Partitionen/Applikationen (P1, P2, P3, P4, P5, P6), der von dem verteilten Avioniksystem auszuführen ist,
Zuweisen eines Partitions-/Applikations-Verfügbarkeitsgrades zu jeder Partition/Applikation (P1, P2, P3, P4, P5, P6),
Zuweisen jedes Computerknotens (A, B, C) zu wenigstens einer eindeutigen Aufgabe, wobei jede Aufgabe einen Teilsatz der Partitionen/Applikationen (P1, P2, P3, P4, P5, P6) umfasst, und Zuweisen jeder Aufgabe zu einem Aufgaben-Verfügbarkeitsgrad, der einen maximalen zulässigen Partitions-/Applikations-Verfügbarkeitsgrad definiert, der in dieser Aufgabe ausgeführt werden soll, wobei die Verfügbarkeitsgrade eine Kritikalität der Aufgabe kennzeichnen,
Zuweisen eines separaten Teilsatzes der Partitionen/Applikationen für die Ausführung durch jeden Knoten auf der Basis der Partitions/Applikations-Verfügbarkeitsgrade,
Überwachen des Betriebs der Computerknoten (A, B, C), um so wenigstens einen Fehlfunktionszustand in einem der Computerknoten zu erfassen, und
erneutes Zuweisen des Teilsatzes von Partitionen/Applikationen der Aufgabe, die dem Computerknoten zugewiesen ist, in dem der Fehlfunktionszustand erfasst wurde, zu jenem Computerknoten, der derzeit der Aufgabe zugewiesen ist, die den geringsten Verfügbarkeitsgrad hat.

## Revendications

1. Système avionique réparti (100, 500) ayant une pluralité de noeuds informatiques agencés pour exécuter une pluralité de partitions/applications (P1, P2, P3, P4, P5, P6), ledit système avionique réparti comprenant des moyens de reconfiguration (332) agencés pour reconfigurer le système avionique réparti lors de la détection d'une défaillance dans au moins l'un des noeuds informatiques, dans lequel
- chaque partition/application est associée à un niveau de disponibilité de partition/application, et les moyens de reconfiguration sont agencés pour reconfigurer le système avionique réparti sur la base des niveaux de disponibilité de partition/application des partitions/applications (P1, P2, P3, P4, P5, P6) ; et **caractérisé en ce que**
- chaque noeud informatique est attribué à au moins un rôle unique et **en ce que** chaque rôle comprend un sous-ensemble des partitions/applications (P1, P2, P3, P4, P5, P6) ; et
- chaque rôle est associé à un niveau de disponibilité de rôle définissant un niveau de disponibilité de partition/application admissible maximale à exécuter dans ce rôle, dans lequel les niveaux de disponibilité indiquent une criticité du rôle, et
dans lequel les moyens de reconfiguration sont agencés pour attribuer le sous-ensemble de partitions/applications du rôle associé au noeud informatique dans lequel la défaillance a été détectée à un noeud informatique actuellement associé au rôle ayant le niveau de disponibilité le plus bas.

2. Système avionique réparti selon la revendication 1, dans lequel les moyens de reconfiguration sont agencés pour empêcher l'exécution du sous-ensemble de partitions/applications associé au rôle ayant le niveau de disponibilité le plus bas.

3. Système avionique réparti selon la revendication 2, dans lequel les moyens de reconfiguration sont agencés pour empêcher l'exécution de partitions/applications associées au même niveau de disponibilité que le niveau de disponibilité du rôle dont l'exécution a également été empêchée dans d'autres rôles.

4. Système avionique réparti selon la revendication 1, **caractérisé en ce que** les moyens de reconfiguration (332) sont agencés pour reconfigurer le système avionique réparti de façon à empêcher l'exécution des partitions/applications associées à un niveau de disponibilité de partition/application le plus bas.

5. Système avionique réparti selon l'une quelconque des revendications précédentes, dans lequel les moyens de reconfiguration sont agencés pour empêcher l'exécution de partitions/applications tant que la défaillance de noeud informatique persiste.

6. Système avionique réparti selon l'une quelconque des revendications précédentes, dans lequel les moyens de reconfiguration (332) sont opérationnellement connectés à des moyens de présentation (334) agencés pour présenter des informations relatives à la défaillance dans au moins un noeud informatique.

7. Système avionique réparti selon la revendication 5, dans lequel les moyens de présentation (334) sont agencés pour présenter des informations relatives au(x) niveau(x) de disponibilité qui n'est/ne sont pas exécuté(s) actuellement.

8. Système avionique réparti selon l'une quelconque des revendications précédentes, comprenant des moyens de détection de panne (331) agencés pour réaliser la détection de défaillance dans au moins l'un des noeuds informatiques.

9. Système avionique réparti selon la revendication 8, dans lequel les moyens de détection de panne (331) sont en outre agencés pour détecter si le noeud informatique défectueux fonctionne à nouveau, et les moyens de reconfiguration (332) sont agencés pour reconfigurer le noeud défectueux lors de la détection qui fonctionne à nouveau de façon à exécuter les partitions/applications dont l'exécution a été exclue pendant la défaillance de noeud informatique.

10. Système avionique réparti selon l'une quelconque des revendications précédentes, dans lequel chaque noeud a accès à au moins toutes les partitions/applications ayant le même niveau de disponibilité de partition/application ou un niveau plus élevé que le niveau de disponibilité de rôle du rôle auquel il est associé.

11. Système avionique réparti selon la revendication 10, dans lequel chaque noeud a accès à toutes les partitions/applications.

12. Système avionique réparti selon l'une quelconque des revendications précédentes, dans lequel les niveaux de disponibilité de rôle et/ou les niveaux de disponibilité de partition/application sont représentés par des niveaux de capacité d'aéronef distincts classés sur la base du contenu ou de la fonctionnalité des partitions/applications.

13. Méthode de reconfiguration dans un système avionique réparti ayant une pluralité de noeuds informatiques (A, B, C), ladite méthode comprenant les étapes suivantes :
fourniture d'un ensemble de partitions/applications (P1, P2, P3, P4, P5, P6) à exécuter par le système avionique réparti,
attribution d'un niveau de disponibilité de partition/application à chaque partition/application (P1, P2, P3, P4, P5, P6),
attribution de chaque noeud informatique (A, B, C) à au moins un rôle unique et dans laquelle chaque rôle comprend un sous-ensemble des partitions/applications (P1, P2, P3, P4, P5, P6) et attribution de chaque rôle à un niveau de disponibilité de rôle définissant un niveau de disponibilité de partition/application admissible maximale à exécuter dans ce rôle, dans laquelle les niveaux de disponibilité indiquent une criticité du rôle,
attribution d'un sous-ensemble séparé des partitions/applications pour une exécution par chaque noeud sur la base de niveaux de disponibilité de partition/application,
surveillance du fonctionnement des noeuds informatiques (A, B, C) de façon à détecter au moins un état défectueux dans l'un des noeuds informatiques, et
réattribution du sous-ensemble de partitions/applications du rôle associé au noeud informatique dans laquelle l'état défectueux a été détecté au noeud informatique actuellement associé au rôle ayant le niveau de disponibilité le plus bas.
